# EUROPEAN PATENT APPLICATION

(11) **EP 0 838 952 A2**
(43) Date of publication of application: **29.04.1998**
(21) Application number: 97117771.2
(22) Date of filing: 14.10.1997
(51) Int. Cl.: H04N 7/26

(54) **Method and apparatus for processing encoded image sequence data**

(30) Priority: 26.10.1996 DE 19644650
(71) Applicant: DEUTSCHE THOMSON-BRANDT GMBH, 78048 Villingen-Schwenningen (DE)
(72) Inventor: Riemann, Uwe, 38124 Braunschweig (DE); Herpel, Carsten, 30171 Hannover (DE)
(74) Representative: Hartnack, Wolfgang, Dipl.-Ing.

(57) **Abstract**

A method for the post-processing of digitally encoded pictures in a picture sequence is proposed, which method is provided in particular for editing processing. In the method, the raw picture material is present in an encoded form. For the purpose of accurate processing, the pictures are first decoded. The new picture sequence is encoded anew after the processing. The associated new encoding operation is in this case controlled in such a way that principally the same frame type (I,B,P) is used as in the original encoding of the picture. For this purpose, concrete measures are proposed for achieving this aim as quickly as possible even after scene cuts. Furthermore, an apparatus for carrying out the method and an apparatus for the buffer-storage of decoded pictures are proposed.

## Description

The invention relates to a method for processing digitally encoded pictures in a picture sequence as well as an apparatus for carrying out the method and an apparatus for buffer-storage of decoded pictures in such a method.

### Prior art

The invention is based on a method for processing digitally encoded pictures in a picture sequence of the generic type of the independent Claim 1. For future digital television broadcasting (DVB = Digital Video Broadcasting) and the associated interactive communications services, video data will have to be reduced to a large extent in terms of their volume of data by means of suitable encoding devices. This step is necessary in order to be able to transmit more programmes over existing channels or in order to communicate moving picture sequences in already existing narrowband transmission paths. One encoding method provided for this purpose is the standardization proposal known under No. ISO/IEC 13818-2, which is better known under the widespread designation MPEG-2 (Moving Pictures Experts Group).

In order to achieve the highest possible compression factor during encoding, the input pictures are combined into groups (so-called GOPs = Group of Pictures) in the MPEG proposal. The individual pictures are encoded differently within this group. According to MPEG-2, it is recommended that a group should consist of an intra-coded frame (I picture) as well as of a plurality of unidirectionally encoded frames (P picture) and of a plurality of bidirectionally encoded pictures (B picture). The data rate required for the transmission of a frame from this group depends on the relevant frame type (I, P, B). The greatest relative volume of data within a Group of Pictures is allotted to the I pictures. They contain all the data which are required for complete reconstruction in the decoder. In contrast, P pictures are predicted from I pictures or P pictures (as a rule from a preceding I or P picture). B pictures, on the other hand, are essentially calculated (interpolated) from already reconstructed I or P pictures. The volume of data which must be transmitted for a B picture is correspondingly low. The presence of a complete I picture in the relevant Group of Pictures is absolutely necessary for the reconstruction of all the pictures of a Group.

Although the above-described classification of the frames into different frame types permits a very high coding efficiency, it imparts different degrees of sensitivity to transmission errors to the different frame types. Thus, transmission or reconstruction errors within B pictures remain restricted to the said pictures themselves, whereas erroneous I and P pictures can affect the entire Group of Pictures (GOP). In the context of the present MPEG-2 parameter selection of 12 frames per GOP, the time duration for this may last up to half a second.

Another effect of this classification is manifested during the decoding of decoded picture material. In the studio or in the domestic sector, it is often necessary to compile new picture sequences from a plurality of already existing partial sequences. This compilation may involve scene cuts, but may also mean special effects mixing between two or more video scenes. However, any special effects mixing has the precondition that the material must first of all be decoded, because post-processing in a data-compressed form is impossible. Cross-fading is mentioned here as an example of special effects mixing. Since scene cuts and special effects mixing should not, practicably, be processed by different methods during the post-processing of encoded picture material, the post-processing is often carried out uniformly with decoded picture material. If it is desired to reuse the video material produced in this way for digital transmission or recording, the picture material must be encoded anew. In this encoding process, there is a high probability that the new Group of Pictures (GOP) will not correspond to the previously selected one, with the result that a loss in quality can be expected as regards the picture quality.

The article by Hedtke, R., Schnöll, M.: Schnittbearbeitung von MPEG-2-codierten Videosequenzen [Editing processing of MPEG-2-encoded video sequences], In: Fernseh- und Kino-Technik, Vol. 50, No. 7, 1996, pp. 367-373 discloses the technique of retaining the original encoding sequence as far as possible during the post-processing of encoded video material. A new "Group of Pictures" is encoded at the cutting point of a sequence.

### Invention

The object of the invention is to improve the post-processing of encoded picture material even further and, in particular, still to comply with the permissible data rate for the new sequence of pictures. This object is achieved according to the invention by means of the features specified in Claim 1.

According to the invention, the same frame type which was also used during the original encoding of the picture is preferably used during the renewed encoding of the pictures after the processing. However, the use of the same frame type is made dependent not only on a scene cut information item but also on whether subsequently or previously a picture has been intra-coded within a specific number of pictures. The effect that this then achieves is that a plurality of I pictures do not rapidly succeed one another and the permissible data rate is not exceeded. If, namely, too many I pictures succeed one another, the encoding unit must, for example, make the quantization coarser in order that the data rate is complied with. The picture quality may additionally suffer as a result. Such losses in quality are prevented by the invention.

In the case where it is detected that a picture has been intra-coded shortly beforehand, it is advantageous if the unidirectionally encoded frame type (P picture) is used in the encoding operation instead of the intra-coded frame type that has been signalled.

It is very advantageous if the frame type is signalled in such a way that a frame type information item is also concomitantly stored during the buffer-storage of the decoded pictures, for example on a hard disk or a magnetic tape recorder. This information item is then permanently available for later evaluation. In the subsequent encoding process, it is then advantageous if the information item is read out in parallel with the corresponding picture and is used for controlling the encoding operation.

It is furthermore advantageous if a cut information item is additionally stored in the case of those pictures after which a cut is carried out. The provision of this information item is advantageous because the first picture of a scene after a scene cut cannot generally be predicted very well from a preceding picture of a completely different scene. The consequence of this is that one of the first pictures after the scene cut must be an intra-coded picture (I picture). Other pictures can then refer to this picture and can then be derived from this picture. It is therefore advantageous if the use of the frame type information during the renewed encoding operation is made dependent on whether a scene cut is subsequently carried out after a specific number of pictures. If that is the case, the current picture sequence must, namely, be concluded by itself. That is to say a picture, to be encoded, of the B picture frame type is no longer permitted to refer to a later picture, because, after all, the scene cut is then carried out. Likewise, no more pictures of the I picture frame type should be encoded, because otherwise overflowing of the buffer store in the encoding device can be expected. This is because it is mandatory that a picture of the I picture frame type be encoded after the scene cut.

Advantageous measures which help to avoid the problems described above are contained in Claims 6 to 13.

Advantageous measures for an apparatus for carrying out the method are mentioned in Claim 12.

Advantageous measures for an apparatus for buffer-storage of decoded pictures, which apparatus is used in the method mentioned above, are specified in Claims 13 and 14.

### Drawings

Exemplary embodiments of the invention are illustrated in the drawings and are explained in more detail in the following description.
In the figures:
- **Fig. 1**: shows an overview of a picture processing system which can be employed in the domestic sector;
- **Fig. 2**: shows a rough block diagram of a set-top box;
- **Fig. 3**: shows a rough block diagram of a picture processing device;
- **Fig. 4**: shows a rough block diagram of a recording device;
- **Fig. 5**: shows a structogram for a program for processing in the picture processing device;
- **Fig. 6**: shows four examples of different scene cuts;
- **Fig. 7**: shows an overview of a picture processing system which is employed in a studio;
- **Fig. 8**: shows the data format for the storage of a decoded picture on a hard disk, and
- **Fig. 9**: shows the division of a magnetic tape for the storage of video data of a decoded picture.

### Description of the invention

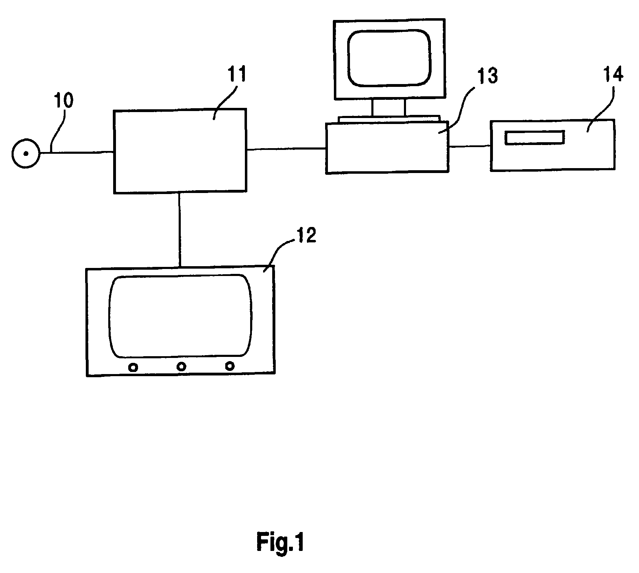

The invention can be employed both in the domestic sector and in professional studios. The invention is first of all explained using an example for the domestic sector. An example of an application in the domestic sector is shown in the manner of an overview in Figure 1. In Figure 1, the reference number 10 designates a broadband cable which is suitable for transmission of the television programmes in a known manner. The broadband cable 10 is connected to a set-top box 11. The set-top box 11 is provided for the reception of digitally encoded video and audio data. A television receiver 12 is connected in a conventional manner to the set-top box 11. The said television receiver then serves in a conventional manner to reproduce the data which are digitally decoded in the set-top box. The set-top box 11 is additionally connected to a picture processing device 13. The picture processing device 13 is in this case essentially represented by a personal computer. A recording device 14 is then also connected to the picture processing device 13. A digital video recorder can be used, for example, as the recording device 14. A digital videodisk player can also be used for this purpose, provided that it is designed for writing to digital videodisks as well.

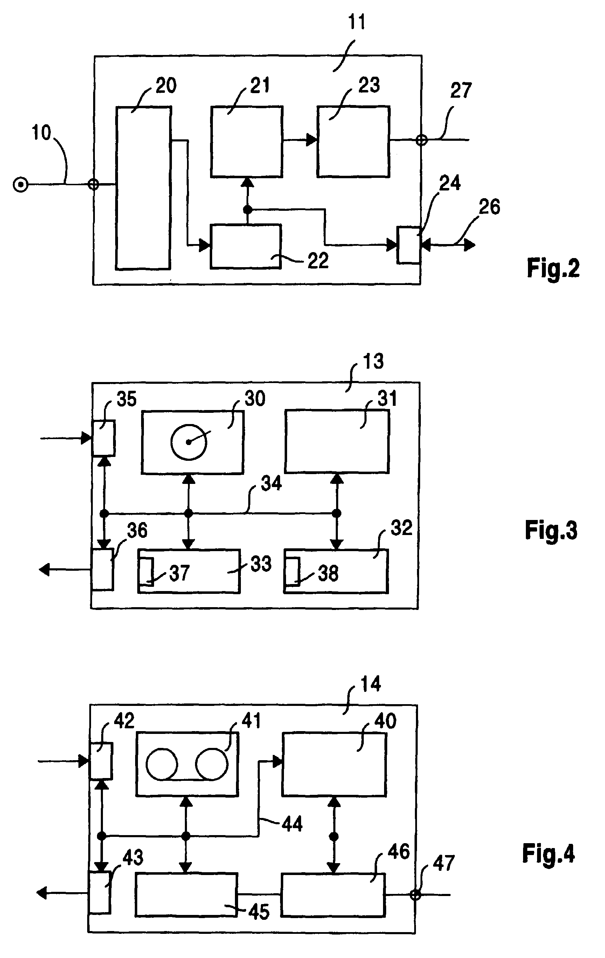

Figure 2 illustrates the structure of the set-top box more closely with the aid of a block diagram. The reference number 20 designates an RF reception section. The RF reception section 20 comprises the tuner and the demodulator circuits for the digitally modulated input signals. A bit stream containing the digital data obtained is present at the output of the RF reception section 20. This bit stream is forwarded to the access control unit 22. This unit is used to determine in a known manner whether the user of the set-top box is authorized to decode the received data. The bit stream is subsequently forwarded via a bus line to a decoding unit 21. For the exemplary embodiment, it is assumed that the decoder 21 represents an MPEG-2 decoder. Decoders of this type have already been disclosed in the prior art. For more detailed information, reference is also made, in particular, to the MPEG-2 standard, which has already been mentioned in the introduction. The decoded data are then forwarded to an RF transmission section 23. The RF modulation in accordance with a television standard such as, for example, PAL, SECAM or NTSC then takes place in the said RF transmission section. The RE signals are forwarded to the output 27. A television receiver can be connected to the latter in a conventional manner. With regard to the further processing of the audio data, it is noted that the processing stages required for this purpose are not illustrated in Figure 2. This serves to simplify the block diagram.

The demodulated digital data are also transmitted to an interface 24 via the abovementioned bus link. The data present at the interface 24 can be picked up via corresponding external bus links 26. The data present there are encoded according to the MPEG-2 standard, but they must then still be decoded for further processing.

The structure of the picture processing device 13 is explained in more detail below with reference to the block diagram in Figure 3. The reference number 35 designates a further interface. Digitally encoded data can be fed to the processing device via this interface. This interface therefore serves to connect the set-top box via the interface 24 to the processing device 13. Digital data which are encoded according to the MPEG-2 standard are therefore fed to the processing device 13 via the interface 35. These data are forwarded via the further bus link 34 to the individual components of the processing unit. The reference number 30 designates a hard disk drive. The reference number 31 designates an arithmetic unit. This is a powerful arithmetic unit of the kind usually available in personal computers. The reference number 32 designates a decoding unit. This is once again an MPEG-2 decoder. The reference number 33, in contrast, designates an encoding device. This is an MPEG-2 encoder as described in the MPEG-2 standard. The decoding unit and encoding unit can be designed as plug-in cards for the personal computer. However, if the arithmetic unit 31 of the personal computer is particularly powerful, the encoding unit and the decoding unit can in each case also be realized by software. In this case, of course, the two units as plug-in modules can be omitted. In this regard, it is also pointed out that the decoding operation and the encoding operation, which will be described in more detail below, do not have to be carried out under real-time conditions. Due to the fact that the pictures to be processed can be buffer-stored on the hard disk drive 30, a longer period of time is available for processing the individual pictures. The encoded data need not be transmitted directly to a television receiver.

So-called control units 38 and 37 are illustrated separately in the decoding unit and in the encoding unit. These control units serve to control the encoding and decoding operations. This will also be discussed in more detail below. Finally, the reference number 36 designates another further interface. This interface 36 serves for outputting digitally encoded data. The connection of the picture processing device 13 to the recording device 14 is established via this interface.

The structure of the recording device 14 is explained in more detail below with reference to Figure 4. In Figure 4, the reference number 42 designates an input interface. It serves to connect the picture processing device 13 to the recording device 14. Once again, a bus link 44 is connected to the interface 42. The received data can be transmitted to the further components of the recording device 14 via the said bus link. The reference number 41 designates a tape drive. The data received via the interface 42 can be stored, for example, in digital form on a magnetic tape cassette. Digital video recorders of this type are likewise disclosed in the prior art. A DVC device (DVC = Digital Video Camcorder) is mentioned as an example. The reference number 40 designates a control unit of the recording device. The reference number 45 in turn designates a decoding unit. The data stored on the magnetic tape cassette in the tape drive 41 are present in an encoded form, as already mentioned, and can be decoded in the decoding unit 45. This is once again an MPEG-2 decoder. The digital data obtained in this way are fed anew to an RF transmission section 46. There the television signals are generated in accordance with one of the television standards and can be picked off via the output 47. The reference number 43 designates an output interface. The output interface 43 serves for outputting the data stored on the magnetic tape cassette. These data are therefore present still in an encoded form and can be fed anew to the picture processing device 13 via the output interface 43, for example for subsequent processing.

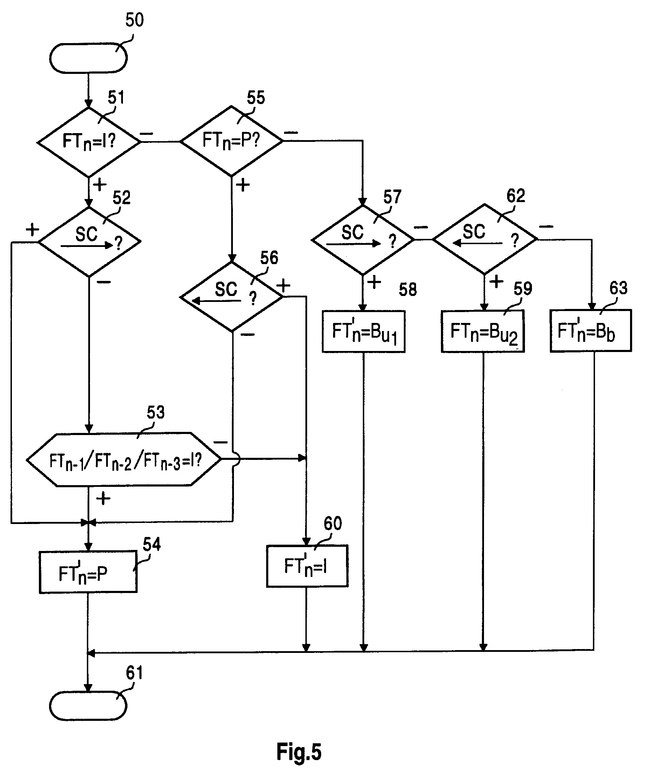

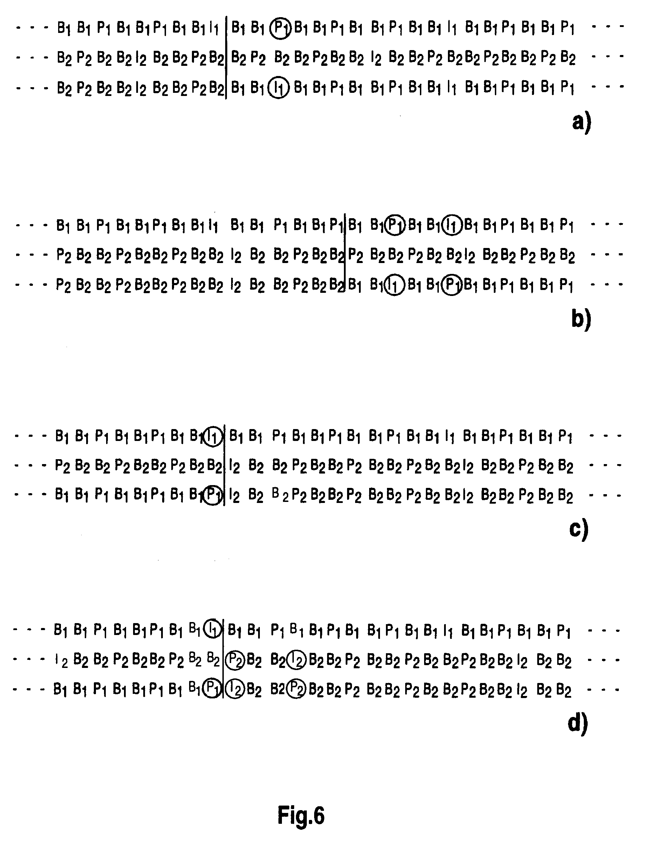

The functioning of the picture processing device 13 is explained in more detail below. The picture processing device 13 serves for the post-processing of received or even recorded picture material. The precondition is that the picture material is present in a form coded according to the MPEG-2 standard. For this reason, the example of a set-top box 11 being connected to the picture processing device 13 was selected in Figure 1. Video cameras intended for the domestic sector and able to record pictures digitally according to the MPEG-2 standard are at present not yet available for the domestic sector. However, it is to be assumed in future that such video cameras will also soon be available. In this case, such video cameras also represent a source for the processing device 13. The pictures recorded according to the MPEG-2 standard are encoded differently. The already mentioned intra-coded pictures, unidirectionally encoded pictures and bi-directionally encoded pictures are permitted. A particular instance of the post-processing of pictures is editing processing. In this case, the intention is to enable a cut to be carried out at any desired picture boundaries. As already mentioned, after processing the pictures are often mixed together in such a way that the previously selected sequence of frame types is no longer valid for the new picture sequence after editing processing. For this reason, the encoding unit in the picture processing device 13 cannot readily encode the pictures with the same frame type as was available for the corresponding picture in the raw picture material. The way in which the encoding unit 33 in the picture processing device 13 can be controlled in order as far as possible to retain the original frame type for the encoding operation is now explained in more detail with reference to Figure 6. The associated control program, which is illustrated as a flow diagram in Figure 5, is processed by the control unit 37 in the encoding unit 33.

The reference number 50 designates the program start of the control program. A check is made in interrogation 51 to see whether or not the frame type of the picture currently to be encoded was an intra-coded picture. In this regard, the encoding unit 33 evaluates an additional information item which was concomitantly stored on the hard disk 30 after the processing operation. The associated data format will be discussed in more detail later. In the case where it is identified in interrogation 51 that the original frame type of this picture corresponds to an I picture, a check is subsequently made in interrogation 52 to see whether or not a scene cut is subsequently carried out after the current picture within three successive pictures. The encoding unit 33 can likewise take this information item from the hard disk drive 30. If there is no subsequent scene cut, a check is made in interrogation 53 to see whether a picture has already been encoded as an intra-coded picture previously within three successive pictures. This information item is also stored in the encoding device itself. If that is likewise not the case, then the picture currently to be encoded is encoded as an intra-coded picture in the program step 60. Afterwards, the program is ended in the program step 61.

In the case where it is ascertained in interrogation 52 that a scene cut is carried out subsequently within three successive pictures, the program branches to the program step 54 instead of to interrogation 53. In the program step 54, it is established that the picture currently to be encoded is to be encoded as a unidirectionally encoded picture. After this program step, the program is then likewise ended in the program step 61. The decision in step 54 that the P picture frame type is encoded as the new frame type instead of the previous I picture frame type that was ascertained is based on the fact that the decoding devices that have been developed are supposed to manage with a buffer store having the smallest size possible. Specifically, the momentary appearance of two intra-coded pictures can then lead to a buffer overflow. As a counter measure, the decoding device can make the quantization coarser, with the result that the arrival of data is reduced, but this is something which leads to a loss of quality in the picture.

If it is identified in interrogation 51 that the frame type of the picture currently to be encoded does not correspond to an intra-coded picture, a check is made in interrogation 55 to see whether the frame type of the current picture corresponds to a unidirectionally encoded picture (P picture). If this is the case, then a check is made in interrogation 56 to see whether a scene cut has been carried out within three successive pictures prior to the current picture. This information is likewise available in the encoding unit. If no scene cut was carried out, the program subsequently branches to the program step 54 where it is established that the picture currently to be encoded is encoded anew as a unidirectionally encoded picture. The program then ends again with program step 61. If, on the other hand, it is identified in interrogation 56 that a scene cut was carried out previously within three pictures, the program branches to the program step 60, in which it is stipulated that the current picture is encoded as an intra-coded picture. The program is then ended once again in program step 61. The practice of changing the frame type with respect to the original frame type is in this case based on the insight that it is necessary for an intra-coded picture to be sent after a scene cut. Specifically, only an intra-coded picture contains no motion vectors and can therefore be decoded completely independently of preceding or succeeding pictures.

In the case where it is ascertained in interrogation 55 that the frame type of the current picture also does not correspond to a P picture, it is automatically determined that a bidirectionally encoded picture (B picture) is involved. For this reason, a check is immediately made in interrogation 57 to see whether or not a scene cut is subsequently carried out within the next two pictures. If this is the case, then it is established in program step 58 that the picture currently to be encoded is encoded as a bidirectionally encoded picture, but only unidirectionally encoded macroblocks are used, which is permitted according to the MPEG-2 standard. To be precise, the macroblocks are permitted to be predicted only from a preceding P or I picture. This then ensures that the last B pictures before the scene cut can still be correctly processed by any decoder.

If it is ascertained in interrogation 57 that no scene cut is subsequently carried out, then a check is made in interrogation 62 to see whether a scene cut has been carried out one or two pictures previously. If this is indeed the case, then it is established in program step 59 that only unidirectionally encoded macroblocks are to be encoded, in which the prediction is permitted to be carried out based on a succeeding picture (I or P picture) . This, too, ensures that the first pictures after a scene cut can be correctly decoded by any decoder. If no scene change had been identified in interrogation 62, then it is established, finally, in program step 63 that the current picture is encoded as a bidirectional picture, and that prediction is permitted in both directions. The program likewise ends with program step 61 after the program steps 58, 59 and 63. With regard to the program, it is also noted that it is designed for the frequently used sequence of pictures within a GOP (Group of Pictures) of the type IBBPBBPBBPBB.. For other sequences, the program must be correspondingly adapted. In addition, it should be understood that the program carries out the interrogations with reference to the order in which the pictures are displayed. The temporal sequence can differ because the order of encoding does not always correspond to the order of display.

Four different scene cuts are illustrated in more detail in figure 6. The order in which the pictures are displayed is illustrated in each case. In Figure 6a, the first two rows represent successive pictures of raw picture material and the frame type originally used for the encoding of the individual pictures is specified in each of the two rows. Two pictures of the bidirectional type are respectively followed by a P picture or an I picture. An index specifies which raw picture sequence is involved in each case. The third row of Figure 6a specifies which pictures succeed one another in the new picture sequence that is desired. It can clearly be discerned that at first only pictures from the second raw picture sequence are shown and then, after the scene cut, which is marked by a vertical line, only the pictures of the first raw picture sequence follow. It is shown that the pictures of the second raw picture sequence are encoded unchanged with regard to their frame type. After the scene cut, in contrast, the change is carried out whereby the first picture having the frame type (P picture) is encoded as an I picture in the new picture sequence. This corresponds to the program step 60 in Figure 5. The changed pictures are each emphasized by circles.

Figure 6b illustrates a different sequence of pictures. There it can be discerned that not only is a picture of the P picture frame type converted into an I picture, but that a subsequent I picture is likewise converted into a P picture. This conversion corresponds to the program step 54. All of the other pictures remain unchanged in terms of their frame type. Figure 6c shows the case where an I picture is converted into a P picture because a scene cut is subsequently carried out. This conversion corresponds to the program step 54 directly after interrogation 52 in Figure 5.

Figure 6d relates to the case where both an I picture is converted into a P picture before a scene cut and a P picture is subsequently converted into an I picture and, as a consequence, an I picture is converted into a P picture. The fact that most of the pictures remain unchanged in respect of their frame type during the renewed encoding can clearly be discerned from Figure 6.

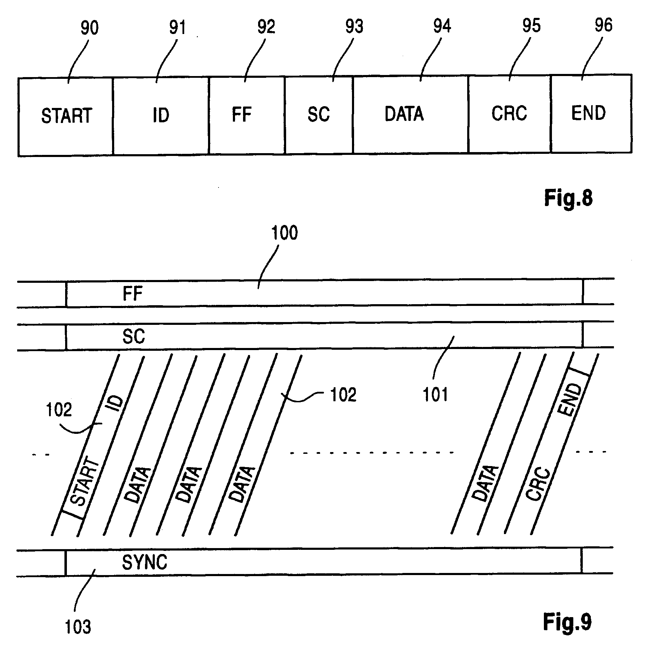

Figure 8 shows the data format for the pictures as they are stored on the hard disk drive. The reference number 90 relates to a data field for a start code of the picture. The reference number 91 designates a data field in which an identification number ID is stored. The reference number 92 relates to a data field in which the frame type FT of the respective picture is stored. The further data field 93 is available for holding an information item SC which specifies whether or not a scene cut is subsequently carried out after this picture. The individual video data are then stored in the further data field 94. There also follow a data field 95 for an error correction code CRC and a data field 96 for an end code END. The video data in the data field 94 are video data in non-encoded form, that is to say pixel data.

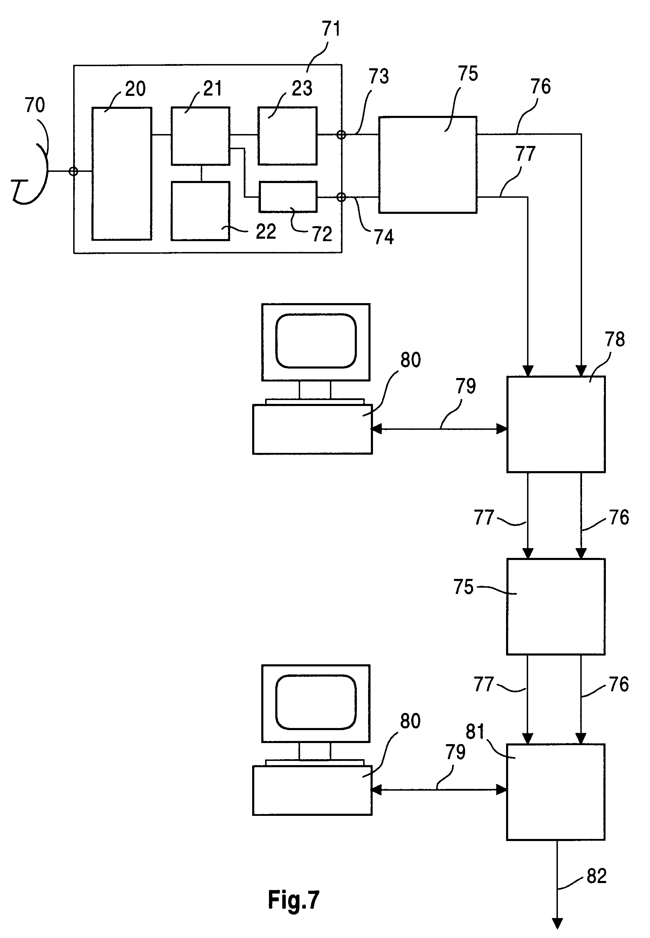

Next, an exemplary embodiment is explained which shows the application of the invention in the professional sector. The components explained below are therefore all professional devices, some of which are already used nowadays in professional studios. In Figure 7, the reference number 70 designates a reception antenna. The satellite reception antenna is illustrated as an example. The raw picture material, for example the picture material recorded by a foreign correspondent, is received in an encoded form by this reception antenna. It is likewise again assumed for the exemplary embodiment that the picture material has been encoded according to the MPEG-2 standard. The reference number 71 designates a satellite receiver. The structure of the satellite receiver is illustrated in greater detail in Figure 7. Those components of the satellite receiver 71 which correspond to the components of the set-top box 11 from Figure 2 have the same reference symbols; they do not, therefore, need to be explained in detail once again. Unlike the set-top box 11, the satellite receiver 71 has an evaluation unit 72, which is connected to the decoding unit 21 and picks up from the latter the information concerning the frame type according to which the picture to be respectively decoded was encoded. This information item is available in the decoding unit 21. The decoding unit 21 has a separate output for this. In the evaluation unit 72, this information item is stored in each case for the duration of a picture and output in analog form to the output 74. The television signals according to one of the television standards are present at the output 73 of the satellite receiver 71.

The reference number 75 designates a digital video recorder. This is a so-called D1 standard video recorder, which is provided for recording digital video data in non-encoded form. Of course, the analog signals at the outputs 73 and 74 must be digitized beforehand in the video recorder. However, this conversion can also be omitted if the data of the satellite receiver 71 are passed to the output already in digital form. The raw picture material is consequently stored in digital form on one or more magnetic tapes. A conventional effects console 78 is available in the studio for the post-processing of this picture material. This likewise involves a picture processing device. It is thus possible not only to carry out scene cuts but also to achieve even further effects, such as, for example, cross-fade effects, special effects processing, etc. The digital D1 recorder 75 is connected to the effects console 78 via the links 76 and 77. A control unit 80 is connected to the effects console 78. This control unit may be a commercially available personal computer. The effects are set and monitored with the aid of the control unit 80. After a sequence has been processed, the associated video data are transmitted via the further links 76 and 77 to a second D1 video recorder. In this case, the digital video data are once again transmitted to the D1 video recorder via the link 76 and both the information regarding the original frame type of a picture and optionally the information that a scene cut is carried out after this picture are transmitted to the D1 video recorder via the link 77. The information items transmitted via the link 77 are recorded anew on an audio track of the video cassette. The processed picture material is thus archived and can be broadcast at a later point in time. The reference number 81 in Figure 7 designates an encoding device. This is a studio MPEG-2 encoder. This studio encoder 81 is likewise controlled with the aid of a control unit 80. A personal computer may likewise be provided for this purpose. The recorded, processed picture material is fed in digital form to the studio encoding device 81. With the aid of the control device 80, the encoding device 81 is controlled in such a way that it processes the additional data on the audio track of the digital video cassette, which data are forwarded via the link 77, according to the pattern as shown in the structogram in figure 5. It is not necessary to explain this structogram here once again. The encoded digital data are then present via the output line 82. They are processed in a conventional manner in further processing stages and finally transported to the transmitter.

With regard to the recording of the supplementary data for the original frame type and also for the optional cut information, reference is made to Figure 9. Figure 9 diagramatically represents the track configuration in a D1 video recorder. The reference number 100 designates an audio track. A frame type information item FT for a picture in digital form is stored in this audio track. The information item can be repeated at regular intervals as long as video data are still stored on the associated slanted tracks. The reference number 101 designates a second audio track. A scene cut information item SC is stored on this track. This information item is not present for every picture, rather only for those pictures after which a scene cut is carried out. As already explained, this information item was determined by the effects console 68 and fed to the connected D1 video recorder. This information item can also be repeated at regular intervals as long as video data are still contained in the corresponding slanted tracks of the video tape for the picture. The slanted tracks of a picture are designated by the reference number 102. The associated video data for the picture are stored in the said tracks. As already explained above in connection with the description of Figure 8, here, too, a start code START, an identification number ID, the video data DATA, a check code CRC and an end code END are stored. The reference number 103 additionally designates a synchronization track. This stores synchronization information SYNC, which also facilitate the retrieval of the video data for a picture.

The invention is not restricted to the exemplary embodiments described above. Diverse modifications and variations of the exemplary embodiments should also be regarded as being within the scope of the invention. Thus, it may be provided, for example, that, instead of the establishment in the program steps 58 and 59 in Figure 5 of selecting the bidirectional frame type for the frame type and simultaneously stipulating that only unidirectionally encoded macroblocks are permitted to be used, it is stipulated in these program steps that only the unidirectional frame type (P picture) is permitted as the frame type. The interrogation condition in interrogation 52, according to which a check is made to see whether a scene cut is carried out within the next three pictures, is connected with the fact that for a GOP according to the MPEG-2 standard, in each case two B pictures should follow a P or I picture. Of course, other possibilities would also come into consideration in a modified program. For example, instead of the interrogation regarding whether a scene cut is carried out within three succeeding pictures, another number may also be considered, such as, for example, within two or even four succeeding pictures. The number "four" should be used in connection with those instances where the matter of concern is that two I pictures should not follow one another too closely, that is to say in the interrogations 52 and 56. The number "two" should be used in connection with those instances where references to the scene cut are involved, that is to say, in the interrogations 57 and 62.

A further modification relates to the MPEG-2 encoding used in the exemplary embodiments. It goes without saying that a different type of encoding can also be used here. The MPEG-1 standard is mentioned as an example. A further modification relates to the recording device 14 and the recording devices 75 in the exemplary embodiment according to Figure 7. Instead of these, a videodisk playback device which is also designed for writing to the videodisks could also be used, for example. As an example, reference is made here to a minidisk playback device or to a DVD playback device which is of corresponding design.

Furthermore, a file on a hard disk or in the volatile memory of the picture processing device is also suitable as a store for the FT and SC information. This file should then likewise contain the respective frame number or an associated time code. Another possibility is to store the FT and SC information together with the respective picture on the hard disk in a file. Therefore, the FT and SC information does not necessarily have to be stored on a magnetic tape or a videodisk.

## Claims

1. Method for processing digitally encoded pictures in a picture sequence, each picture of the picture sequence having been encoded in accordance with one frame type (I,B,P) from a number of frame types, the pictures being decoded and being changed in the decoded
form, particularly with regard to their compilation or their picture contents, and renewed encoding of the pictures subsequently being carried out, the same frame type as in the original encoding preferably being used in the renewed encoding of a picture, the use of the same frame type for the renewed encoding operation additionally being made dependent on whether subsequently or previously a scene cut is carried out or has ben carried out within a specific number of pictures, **characterized** in that the use of the same frame type for the renewed encoding operation is furthermore made dependent on whether subsequently or previously a picture has been intra-coded within a specific number of pictures.

2. Method according to Claim 1, **in which** the decoded pictures are buffer-stored in a store, in particular on a hard disk (30) or a magnetic tape recorder (75), and a frame type information item (FT), according to which the picture was originally encoded, is additionally stored.

3. Method according to Claim 2, **in which** the frame type information item (FT) is read out during the renewed encoding of a picture and is used to control the encoding operation.

4. Method according to one of Claims 1 to 3, **in which** the pictures are encoded in accordance with one of the frame types: intra-coded picture (I) unidirectionally encoded picture (P) or bidirectionally encoded picture (B).

5. Method according to one of Claims 1 to 4, **in which** a cut information item (SC), which specifies after which picture a scene cut is carried out, is additionally stored.

6. Method according to one of Claims 1 to 5, **in which,** in the case where a scene cut is subsequently carried out after the specific number of pictures, and the frame type information item (FT) specifies an intra-coded picture (I) for the current picture, the current picture is instead encoded as a unidirectionally encoded picture (P).

7. Method according to one of Claims 1 to 5, **in which,** in the case where a scene cut is subsequently carried out after the specific number of pictures, and the frame type information item specifies a bidirectionally encoded picture (B) for the current picture, the current picture is instead encoded as a unidirectionally encoded picture (P) or as a bidirectionally encoded picture (B) with unidirectionally encoded macroblocks.

8. Method according to one of Claims 1 to 5, **in which,** in the case where a scene cut has been previously carried out within the specific number of pictures and the frame type information item (FT) specifies a unidirectionally encoded picture (P) for the current picture, the current picture is instead encoded as an intra-coded picture (I).

9. Method according to one of Claims 1 to 5, **in which,** in the case where a scene cut has previously been carried out within the specific number of pictures and the frame type information item (FT) specifies a bidirectionally encoded picture (B) for the current picture, the current picture is instead encoded as a unidirectionally encoded picture (P) based on a picture to be displayed later, or as a bidirectionally encoded picture (B) with unidirectionally encoded macroblocks based on the picture to be displayed later.

10. Method according to one of Claims 1 to 5, **in which,** in the case where the picture has previously been intra-coded within the specific number of pictures and the frame type information item (FT) specifies an intra-coded picture (I) for the current picture, the current picture is instead encoded as a unidirectionally encoded picture (P).

11. Method according to one of Claims 1 to 5, **in which,** in the case where a picture has subsequently been intra-coded within the specific number of pictures and the frame type information item (FT) specifies an intra-coded picture (I) for the current picture, the current picture is instead encoded as a unidirectionally encoded picture (P).

12. Apparatus for carrying out the method according to one of the preceding claims, having a decoding unit (32) for decoding encoded pictures in a picture sequence, each picture being encoded with one of a number of frame types (I,P,B), having a processing unit (31) for processing the decoded pictures, particularly with regard to their compilation or their picture contents, having an encoding unit (33) for the renewed encoding of the processed pictures, having a storage device (30), in which the decoded processed pictures are buffer-stored, having control means (37), which control the encoding unit during the renewed encoding in such a way that the same frame type as in the original encoding is preferably employed during the renewed encoding, **characterized** in that the apparatus furthermore comprises storage means (92) in which the respective original frame type of the pictures in the picture sequence can be stored, and in that further storage means (93) are provided, in which a cut information item which specifies after which picture a scene cut is carried out can be stored.

13. Apparatus for the buffer-storage of decoded pictures in a method according to one of Claims 1 to 11 **characterized** in that the apparatus comprises storage means (100) in which a frame type information item (FT) which specifies the frame type (FT) according to which the picture was originally encoded can be stored in connection with each of the decoded pictures.

14. Apparatus according to Claim 13, **in which** the apparatus comprises further storage means (101) in which a cut information item (SC) which specifies after which picture a scene cut is carried out can be stored.
